# EUROPÄISCHE PATENTSCHRIFT

(11) **EP 2 628 765 B1**
(45) Veröffentlichungstag und Bekanntmachung des Hinweises auf die Patenterteilung: **08.02.2017**
(21) Anmeldenummer: 12156216.9
(22) Anmeldetag: 20.02.2012
(51) Int. Cl.: B60C 1/00, C08K 5/3477, C08K 5/3492, C08L 21/00

(54) **Schwefelvernetzbare Kautschukmischung**
Sulphur linkable natural rubber mixture
Mélange de caoutchouc pouvant être mis en réseau avec du souffre

(43) Veröffentlichungstag der Anmeldung: 21.08.2013
(73) Patentinhaber: Continental Reifen Deutschland GmbH, 30165 Hannover (DE)
(72) Erfinder: Kramer, Thomas, 32049 Herford (DE); Recker, Carla, 30167 Hannover (DE); Krüger, Jörn, 30926 Seelze (DE); Rajan, Vipin, 30173 Hannover (DE)
(74) Vertreter: Fornefett, Iris

(56) Entgegenhaltungen:
- EP-A2- 1 323 776
- DE-A1- 3 006 803
- DE-B- 1 292 842
- US-B2- 7 265 173

## Beschreibung

Die Erfindung betrifft Fahrzeugluftreifen gemäß Anspruch 1 aufweisend zumindest eine vulkanisierte Kautschukmischung als Kerndrahtumspritzung, wobei die vulkanisierte Kautschukmischung auf einer schwefelvernetzbaren Kautschukmischung basiert, welche Hexamethoxymethylmelamin (HMMM) und/oder Hexamethylentetramin (HMT) enthält.

Schwefelvernetzbare Kautschukmischungen, die Hexamethoxymethylmelamin (HMMM) und/oder Hexamethylentetramin (HMT) enthalten, sind in der Gummiindustrie und insbesondere in der Reifenindustrie weit verbreitet. Sie werden als Mischungen für die Anhaftung an Festigkeitsträgern eingesetzt, wobei in den Mischungen, um der Haftungsfunktion zu genügen, stets Hexamethoxymethylmelamin (HMMM) und/oder Hexamethylentetramin (HMT) als Methylendonor/Formaldehydspender in Kombination mit einem Methylenakzeptorreaktanten eingesetzt werden. Als Methylenakzeptorreaktanten kommen dabei Resorcin und Resorcinäquivalente zum Einsatz. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus. Als Festigkeitsträger, die mit Hilfe des System und ggf. weiterer Zuschlagstoffe zur Haftung gebracht werden können, zählen sowohl textile Festigkeitsträger, wie Rayon, Polyamid oder Polyester, als auch metallische Festigkeitsträger, insbesondere vermessingter Stahlcord.

Mischungen, die auf Methylenakzeptorreaktanten verzichten, sind z. B. aus der EP 0 830 423 B1 und der EP 2 065 219 A1 bekannt. In diesen Schriften werden aber so genannte selbstkondensierende alkylierte Triazinharze mit hoher Imino- und/oder Methylolfunktionalität eingesetzt, wobei angenommen wird, dass die hohe Imino- und/oder Methylolfunktionalität es diesen Harzen erlaubt, selbst zu kondensieren und dabei ein für die Haftung nötiges Netzwerk zu bilden, ohne dass es eines Methylenakzeptorreaktanten bedarf. Die Verwendung von Hexamethoxymethylmelamin (HMMM) und/oder Hexamethylentetramin (HMT) in nicht-funktionalisierter Form ohne gleichzeitige Verwendung von Methylenakzeptorreaktanten wird in diesen Schriften nicht erwähnt.

Es hat sich gezeigt, dass Mischungen, die Hexamethoxymethylmelamin (HMMM) und/oder Hexamethylentetramin (HMT) in Kombination mit einem Methylenakzeptorreaktanten, wie Resorcin, in den vulkanisierten Mischungen zu einem erhöhten Wärmeaufbau führen, der sich bei vielen Anwendungen in der Gummiindustrie als nachteilig anzusehen ist.

Der Erfindung liegt daher die Aufgabe zu Grunde, eine Kautschukmischung bereitzustellen, die sich durch einen verringerten Wärmeaufbau bei gleichzeitig möglichst unveränderten anderen Vulkanisateigenschaften auszeichnet.

Gelöst wird die Aufgabe erfindungsgemäß dadurch, dass die Kautschukmischung im Wesentlichen frei von Methylenakzeptorreaktanten ist.

Im Rahmen dieser Erfindung ist unter dem Ausdruck "im Wesentlichen frei von Methylenakzeptorreaktanten" zu verstehen, dass solche Reaktanten nur in geringen Mengen, z. B. als Verunreinigungen in anderen Bestandteilen der Zuschlagstoffe der Kautschukmischung, vorhanden sind. In keinem Fall sind diese Methylenakzeptorreaktanten in molaren Mengen in der gleichen Größenordnung wie Hexamethoxymethylmelamin (HMMM) und/oder Hexamethylentetramin (HMT) in der Mischung enthalten.

Es hat sich überraschenderweise gezeigt, dass Kautschukmischungen ohne Methylenakzeptorreaktant wie Resorcin aber mit Hexamethoxymethylmelamin (HMMM) und/oder Hexamethylentetramin (HMT, 1,3,5,7-Tetraazaadamantan, Urotropin) zu Vulkanisaten führen, die einen geringeren Wärmeaufbau bei gleichzeitig ähnlichem Steifigkeitsniveau aufweisen.

Zusätzlich bieten die erfindungsgemäßen Mischungen den Vorteil, dass auf das als gesundheitsschädlich und umweltgefährlich eingestufte Resorcin verzichtet werden kann.

Aus toxikologischer Sicht ist es von Vorteil, wenn die Kautschukmischung Hexamethoxymethylmelamin (HMMM) und kein Hexamethylentetramin (HMT) enthält. Hexamethoxymethylmelamin (HMMM) setzt bei der Vulkanisation der Kautschukmischung weniger schädliche Stoffe frei als Hexamethylentetramin (HMT) und wirkt besser im Hinblick auf einen reduzierten Wärmeaufbau. Das Hexamethoxymethylmelamin (HMMM) kann der Mischung in Reinform (flüssig) zugesetzt werden. Es ist aber auch möglich, das Hexamethoxymethylmelamin (HMMM) aufgezogen auf einen Träger, z. B. Kieselsäure, zuzugeben.

Für eine besonders gutes Verhältnis von verringertem Wärmeaufbau bei gutem Steifigkeitsniveau hat es sich als vorteilhaft erwiesen, wenn die Kautschukmischung 0,3 bis 4 phr, vorzugsweise 0,5 bis 3 phr, Hexamethoxymethylmelamin (HMMM) enthält.

Alternativ dazu kann die Kautschukmischung aber auch Hexamethylentetramin (HMT) und kein Hexamethoxymethylmelamin (HMMM) enthalten. Das Hexamethylentetramin (HMT) wird dann vorzugsweise in Mengen von 0,3 bis 4 phr eingesetzt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die schwefelvernetzbare Kautschukmischung enthält weitere in der Kautschukindustrie übliche Bestandteile, insbesondere zumindest einen Kautschuk. Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (ca 10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Styrol-Butadien-Copolymere einsetzbar. Bei den Styrol-Butadien-Copolymeren kann es sich um lösungspolymerisierte Styrol-Butadien-Copolymere (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden können. Die S-SBR können auch gekoppelt und endgruppenmodifiziert sein. Es können aber auch emulsionspolymerisierte Styrol-Butadien-Copolymere (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen handeln.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die Kautschukmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Kautschukmischung eingesetzt, handelt es sich bevorzugt um solche Typen, die eine CTAB-Oberfläche (gemäß ASTM D 3765) von mehr als 30 m²/g aufweisen.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 120 bis 250 m²/g, aufweist. Als Kieselsäuren können sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Kautschukmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden.

Des Weiteren kann die erfindungsgemäße Kautschukmischung übliche Zusatzstoffe in üblichen Gewichtsteilen enthalten. Zu diesen Zusatzstoffen zählen Weichmacher, wie z. B. Glyceride, Faktisse, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der Kautschukmischung zugesetzt. Die Vulkanisation kann auch in Anwesenheit von sehr geringen Schwefelmengen in Kombination mit schwefelspendenden Substanzen erfolgen.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Kautschukmischung kann in unterschiedlichsten Gummiprodukten, in denen ein erhöhter Wärmeaufbau vermieden werden soll, eingesetzt werden, beispielsweise in Antriebsriemen, Fördergurten oder Schläuchen.

Die erfindungsgemäße Kautschukmischung wird in Fahrzeugluftreifen eingesetzt, um Schädigungen des Reifens durch erhöhten Wärmeaufbau zu verhindern. Die Kautschukmischung kann für unterschiedlichste Reifenbauteile verwendet werden, wobei die Kautschukmischung in einem Reifen für mehrere Bauteile eingesetzt werden kann.

Gemäß der Erfindung handelt es sich bei der vulkanisierten Kautschukmischung um die Kerndrahtumspritzung eines Fahrzeugluftreifens. Für diese Ausgestaltung enthält die Kautschukmischung bevorzugt mehr als 45 phr eines emulsionspolymerisierten Styrol-Butadien-Copolymers, mehr als 80 phr Ruß und mehr als 10 phr Weichmacheröl für eine optimale Verarbeitbarkeit und gute Ummantelung des Kerndrahtes.

Gemäß einer Ausführungsform der Erfindung steht die vulkanisierte Kautschukmischung bei dem Fahrzeugluftreifen nicht mit Festigkeitsträgern in Kontakt, so kann die Mischung als Apexmischung, für den Squeegee, für mondsichelförmige Inserts im Seitenwandbereich oder als Laufstreifenbase eingesetzt werden.

Vorzugsweise weist der Fahrzeugluftreifen die erfindungsgemäße Kautschukmischung als Untertreadplatte und/oder Schulterpolster auf, um an diesen Stellen einen übermäßigen Wärmeaufbau und dadurch einen vorzeitigen Ausfall des Reifens zu verhindern.

Wird die Kautschukmischung als Untertreadplatte und/oder Schulterpolster eingesetzt, enthält die Mischung bevorzugt zumindest einen Ruß mit einer CTAB-Oberfläche (gemäß ASTM D 3765) von mehr als 80 m²/g. Auf diese Weise wird der Wärmeaufbau weiter reduziert und diese Ruße lassen sich gut einmischen. Als Ruß kann z. B. solcher des Typs N 326 eingesetzt werden.

Gemäß einer alternativen Ausführungsform der Erfindung kann die Kautschukmischung auch die Textilcordgummierung eines Fahrzeugluftreifens bilden.

Möglich ist auch, dass die Kautschukmischung die Stahlcordgummierung eines Fahrzeugluftreifens bildet. Für eine derartige Ausgestaltung hat es sich als vorteilhaft für eine gute Haftung erwiesen, wenn die Kautschukmischung 40 bis 70 phr angebundene Kieselsäure enthält. Es sind aber auch Stahlcordgummierungen einsetzbar, die einen großen Anteil an Ruß als Füllstoff und wenig Kieselsäure enthalten.

Die Herstellung der erfindungsgemäßen Fahrzeugluftreifen erfolgt nach dem Fachmann bekannten Verfahren.

Die Erfindung soll nun anhand der nachstehenden Tabellen näher erläutert werden.

In den Tabellen 1 bis 6 sind Beispielmischungen für unterschiedliche Bauteile eines Fahrzeugluftreifens angegeben. In Tabelle 1 sind Mischungen für eine Untertreadplatte dargestellt. Tabelle 2 zeigt Mischungen, die für ein Schulterpolster unter der ersten Gürtellage von Fahrzeugluftreifen eingesetzt werden können.

Tabelle 3 gibt mögliche Mischungen für Textilcordgummierungen in einem Fahrzeugluftreifen wieder. Die Tabellen 4 und 5 stellen Stahlcordgummierungsmischungen vor, wobei in die Mischungen in der Tabelle 4 einen hohen Rußgehalt und die Mischungen der Tabelle 5 einen hohen Kieselsäuregehalt aufweisen. Tabelle 6 zeigt beispielhaft Mischungen für Kerndrahtumspritzungen.

Bei den erfindungsgemäßen Mischungen wurde zum Angleich der Rheometerkurven die Beschleunigermenge erhöht.

Die Mischungsherstellung erfolgte unter üblichen Bedingungen unter Herstellung einer Grundmischung und anschließend der Fertigmischung in einem Labortangentialmischer. Es wurden die Mooney-Viskositäten ML (1+4) bei 100 °C mit Hilfe eines rotorlosen Vulkameters (MDR = Moving Disc Rheometer) gemäß DIN 53 523 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte (Modul) bei 100 bzw. 300 % Dehnung bei Raumtemperatur gemäß DIN 53 504

**Tabelle 1**

| **Bestandteile** | **Einheit** | **1(V)** | **2(V)** | **3(E)** |
|---|---|---|---|---|
| Polyisopren | phr | 100 | 100 | 100 |
| Ruß N326 | phr | 52 | 52 | 52 |
| Kieselsäure | phr | 10 | 10 | 10 |
| Weichmacheröl/Klebharz | phr | 12,8 | 12,8 | 12,8 |
| Alterungsschutzmittel | phr | 2,5 | 2,5 | 2,5 |
| Resorcin | phr | 1,25 | - | - |
| Hexamethoxymethylmelamin^{a)} | phr | 2,1 | - | 2,1 |
| Stearinsäure | phr | 1 | 1 | 1 |
| Zinkoxid | phr | 6 | 6 | 6 |
| Beschleuniger | phr | 1,2 | 1,2 | 1,5 |
| Schwefel | phr | 5,5 | 5,5 | 5,5 |

| **Eigenschaften** | | | | |
|---|---|---|---|---|
| ML (1+4) bei 100 °C | Mooney-Einh. | 61 | 63 | 64 |
| MHF-ML | dNm | 19 | 15 | 19 |
| Härte bei RT | ShoreA | 66 | 62 | 66 |
| Rückprallelast. bei RT | % | 43 | 44 | 47 |
| Rückprallelast. bei 70 °C | % | 59 | 60 | 61 |
| Zugfestigkeit bei RT | MPa | 21 | 22 | 22 |
| Reißdehnung bei RT | % | 488 | 555 | 507 |
| Modul 300 % | MPa | 13,3 | 10,8 | 13,3 |

| | | | | |
|---|---|---|---|---|
| ^{a)} 65 %ig auf anorganischem Träger | | | | |

Tabelle 1 zeigt, dass die Rückprallelastizität der erfindungsgemäßen Mischung, die nur HMMM und kein Resorcin enthält, bei 70 °C größer ist als die der Vergleichsmischungen. Dies korreliert mit einem verringerten Wärmeaufbau bei Belastung. Gleichzeitig bleiben bei Mischung 3(E) die Spannungswerte bei Dehnung, die mit der Steifigkeit gleichzusetzen sind, auf dem Niveau der Mischung 1(V).

**Tabelle 2**

| **Bestandteile** | **Einheit** | **4(V)** | **5(V)** | **6(E)** |
|---|---|---|---|---|
| Polyisopren | phr | 100 | 100 | 100 |
| Ruß N339 | phr | 26 | 26 | 26 |
| Kieselsäure | phr | 15,4 | 15,4 | 15,4 |
| Weichmacheröl/Klebharz | phr | 5,1 | 5,1 | 5,1 |
| Alterungsschutzmittel | phr | 2 | 2 | 2 |
| Resorcin | phr | 1,3 | - | - |
| Hexamethoxymethylmelamin^{a)} | phr | 2 | - | 2 |
| Zinkstearat | phr | 0,5 | 0,5 | 0,5 |
| Zinkoxid | phr | 6 | 6 | 6 |
| Beschleuniger | phr | 1,8 | 1,8 | 2 |
| Schwefel | phr | 3 | 3 | 3 |

| **Eigenschaften** | | | | |
|---|---|---|---|---|
| ML (1+4) bei 100 °C | Mooney-Einh. | 69 | 74 | 73 |
| MHF-ML | dNm | 14 | 12 | 13 |
| Härte bei RT | ShoreA | 56 | 53 | 57 |
| Rückprallelast. bei RT | % | 55 | 54 | 59 |
| Rückprallelast. bei 70 °C | % | 68 | 66 | 71 |
| Zugfestigkeit bei RT | MPa | 23 | 22 | 24 |
| Reißdehnung bei RT | % | 588 | 640 | 607 |
| Modul 300% | MPa | 9,1 | 6,8 | 8,7 |

| | | | | |
|---|---|---|---|---|
| ^{a)} 65 %ig auf anorganischem Träger | | | | |

Aus Tabelle 2 wird ebenfalls ersichtlich, dass die Rückprallelastizität der erfindungsgemäßen Mischung, die nur HMMM und kein Resorcin enthält, bei 70 °C größer ist als die der Vergleichsmischungen. Dies korreliert mit einem verringerten Wärmeaufbau bei Belastung. Gleichzeitig bleiben bei Mischung 6(E) die Spannungswerte bei Dehnung, die mit der Steifigkeit gleichzusetzen sind, auf dem Niveau der Mischung 4(V).

**Tabelle 3**

| **Bestandteile** | **Einheit** | **7(V)** | **8(V)** | **9(E)** |
|---|---|---|---|---|
| Polyisopren | phr | 50 | 50 | 50 |
| Polybutadien | phr | 20 | 20 | 20 |
| ESBR^{a)} | phr | 41,25 | 41,25 | 41,25 |
| Ruß N660 | phr | 65 | 65 | 65 |
| Weichmacheröl/Klebharz | phr | 20,5 | 20,5 | 20,5 |
| Alterungsschutzmittel | phr | 2 | 2 | 2 |
| Resorcin | phr | 1,63 | - | - |
| Hexamethoxymethylmelamin^{b)} | phr | 2 | - | 2 |
| Stearinssäure | phr | 1 | 1 | 1 |
| Zinkoxid | phr | 3 | 3 | 3 |
| Beschleuniger | phr | 1 | 1 | 1,2 |
| Schwefel | phr | 3,8 | 3,8 | 3,8 |

| **Eigenschaften** | | | | |
|---|---|---|---|---|
| ML (1+4) bei 100 °C | Mooney- | 52 | 48 | 48 |
| | Einh. | | | |
| MHF-ML | dNm | 9 | 10 | 9 |
| Härte bei RT | ShoreA | 50 | 48 | 49 |
| Rückprallelast. bei RT | % | 48 | 50 | 49 |
| Rückprallelast. bei 70 °C | % | 59 | 62 | 62 |
| Zugfestigkeit bei RT | MPa | 14 | 15 | 13 |
| Reißdehnung bei RT | % | 594 | 619 | 576 |
| Modul 300 % | MPa | 6,6 | 6,3 | 6,5 |

| | | | | |
|---|---|---|---|---|
| ^{a)} ölverstreckt mit 27,3 % aromatenfreiem Öl ^{b)} 65 %ig auf anorganischem Träger | | | | |

Bei den Textilcordgummierungsmischungen der Tabelle 3 wirkt sich das Weglassen von Resorcin ebenfalls positiv auf die Rückprallelastizität bei 70 °C aus, wobei gleichzeitig der Spannungswert bei 300 % Dehnung auf hohem Niveau liegt.

**Tabelle 4**

| **Bestandteile** | **Einheit** | **10(V)** | **11(V)** | **12(E)** |
|---|---|---|---|---|
| Polyisopren | phr | 100 | 100 | 100 |
| Ruß N326 | phr | 53 | 53 | 53 |
| Kieselsäure | phr | 10 | 10 | 10 |
| Weichmacheröl/Klebharz | phr | 10 | 10 | 10 |
| Alterungsschutzmittel | phr | 2 | 2 | 2 |
| Resorcin | phr | 1,25 | - | - |
| Hexamethoxymethylmelamin^{a)} | phr | 2 | - | 2 |
| Co-Borat-Alkanoat | phr | 0,7 | 0,7 | 0,7 |
| Zinkoxid | phr | 8 | 8 | 8 |
| Beschleuniger | phr | 1,5 | 1,5 | 1,7 |
| Schwefel | phr | 5,5 | 5,5 | 5,5 |

| **Eigenschaften** | | | | |
|---|---|---|---|---|
| ML (1+4) bei 100 °C | Mooney-Einh. | 82,4 | 86,1 | 86,8 |
| MHF-ML | dNm | 23 | 14 | 20 |
| Härte bei RT | ShoreA | 72 | 61 | 70 |
| Rückprallelast. bei RT | % | 42 | 39 | 44 |
| Rückprallelast. bei 70 °C | % | 59 | 56 | 61 |
| Zugfestigkeit bei RT | MPa | 22 | 20 | 21 |
| Reißdehnung bei RT | % | 428 | 563 | 428 |
| Modul 300 % | MPa | 16,3 | 9,5 | 15,3 |

| | | | | |
|---|---|---|---|---|
| ^{a)} 65 %ig auf anorganischem Träger | | | | |

Auch hier zeichnet sich die erfindungsgemäße Mischung 12(E) durch eine hohe Rückprallelastizität bei erhöhter Temperatur aus, wobei die anderen physikalischen Daten auf dem Niveau der Mischung 10(V), obwohl auf das Resorcin zur Netzwerkbildung verzichtet wurde.

**Tabelle 5**

| **Bestandteile** | **Einheit** | **13(V)** | **14(V)** | **15(E)** |
|---|---|---|---|---|
| Polyisopren | phr | 80 | 80 | 80 |
| Polybutadien | phr | 20 | 20 | 20 |
| Kieselsäure | phr | 55 | 55 | 55 |
| Silan-Kupplungsagenz ^{a)} | phr | 8,5 | 8,5 | 8,5 |
| Weichmacheröl/Klebharz | phr | 7 | 7 | 7 |
| Alterungsschutzmittel | phr | 3,8 | 3,8 | 3,8 |
| Resorcin | phr | 2,5 | - | - |
| Hexamethoxymethylmelamin^{b)} | phr | 3,85 | - | 3,85 |
| Co-Borat-Alkanoat | phr | 0,4 | 0,4 | 0,4 |
| Zinkoxid | phr | 8 | 8 | 8 |
| Beschleuniger | phr | 1,6 | 1,6 | 1,8 |
| Schwefel | phr | 4 | 4 | 4 |

| **Eigenschaften** | | | | |
|---|---|---|---|---|
| ML (1+4) bei 100 °C | Mooney- | 73 | 82 | 77 |
| | Einh. | | | |
| MHF-ML | dNm | 33 | 29 | 30 |
| Härte bei RT | ShoreA | 79 | 73 | 76 |
| Rückprallelast. bei RT | % | 43 | 45 | 44 |
| Rückprallelast. bei 70 °C | % | 55 | 59 | 57 |
| Zugfestigkeit bei RT | MPa | 18 | 21 | 20 |
| Reißdehnung bei RT | % | 405 | 530 | 496 |
| Modul 300 % | MPa | 13,8 | 11,0 | 12,2 |

| | | | | |
|---|---|---|---|---|
| ^{a)} 50 %ig auf Ruß als Träger ^{b)} 65 %ig auf anorganischem Träger | | | | |

Auch bei den in der Tabelle 5 dargestellten Stahlcordgummierungsmischungen mit hohem Kieselsäuregehalt ist der Effekt des verringerten Wärmeaufbaus bei ähnlichem Steifigkeitsniveau für die erfindungsgemäße Mischung zu beobachten.

**Tabelle 6**

| **Bestandteile** | **Einheit** | **16(V)** | **17(V)** | **18(E)** |
|---|---|---|---|---|
| Polyisopren | phr | 30 | 30 | 30 |
| ESBR | phr | 70 | 70 | 70 |
| Regenerat | phr | 10 | 10 | 10 |
| Ruß N660 | phr | 110 | 110 | 110 |
| Weichmacheröl | phr | 10 | 10 | 10 |
| Resorcin | phr | 0,5 | - | - |
| Hexymethylentetramin^{a)} | phr | 0,4 | - | 0,4 |
| Stearinsäure | phr | 2,5 | 2,5 | 2,5 |
| Zinkoxid | phr | 3 | 3 | 3 |
| Kreide | phr | 10 | 10 | 10 |
| Beschleuniger | phr | 1 | 1 | 1,2 |
| Schwefel | phr | 3,2 | 3,2 | 3,2 |

| **Eigenschaften** | | | | |
|---|---|---|---|---|
| ML (1+4) bei 100 °C | Mooney-Einh. | 85 | 87 | 83 |
| MHF-ML | dNm | 33 | 30 | 34 |
| Härte bei RT | ShoreA | 84 | 82 | 83 |
| Rückprallelast. bei RT | % | 36 | 35 | 38 |
| Rückprallelast. bei 70 °C | % | 52 | 50 | 54 |
| Zugfestigkeit bei RT | MPa | 12 | 12 | 12 |
| Reißdehnung bei RT | % | 115 | 120 | 110 |
| Modul 100 % | MPa | 11,3 | 10,3 | 11,0 |

| | | | | |
|---|---|---|---|---|
| ^{a)} 65 %ig auf anorganischem Träger | | | | |

Bei den Kerndrahtumspritzungsmischungen der Tabelle 6 kann allein durch das Herausnehmen von Resorcin aus der Mischungszusammensetzung ebenfalls ein Vulkanisat erhalten werden, dass sich durch hohe Rückprallelastizität bei 70 °C bei gleichzeitig hohem Spannungswert auszeichnet.

## Patentansprüche

1. Fahrzeugluftreifen aufweisend zumindest eine vulkanisierte Kautschukmischung als Kerndrahtumspritzung, wobei die vulkanisierte Kautschukmischung auf einer schwefelvernetzbaren Kautschukmischung basiert, welche Hexamethoxymethylmelamin (HMMM) und/oder Hexamethylentetramin (HMT) enthält, wobei die schwefelvernetzbare Kautschukmischung Methylenakzeptorreaktanten nur in geringen Mengen als Verunreinigungen in anderen Bestandteilen der Zuschlagstoffe der Kautschukmischung enthält und in keinem Fall diese Methylenakzeptorreaktanten in molaren Mengen in der gleichen Größenordnung wie Hexamethoxymethylmelamin (HMMM) und/oder Hexamethylentetramin (HMT) in der Kautschukmischung enthalten sind.

2. Fahrzeugluftreifen nach Anspruch 1, **dadurch gekennzeichnet, dass** die schwefelvernetzbare Kautschukmischung Hexamethoxymethylmelamin (HMMM) enthält.

3. Fahrzeugluftreifen nach Anspruch 2, **dadurch gekennzeichnet, dass** die schwefelvernetzbare Kautschukmischung 0,3 bis 4 phr, vorzugsweise 0,5 bis 3 phr, Hexamethoxymethylmelamin (HMMM) enthält.

4. Fahrzeugluftreifen nach Anspruch 1, **dadurch gekennzeichnet, dass** die schwefelvernetzbare Kautschukmischung Hexamethylentetramin (HMT) enthält.

5. Fahrzeugluftreifen nach Anspruch 4, **dadurch gekennzeichnet, dass** die schwefelvernetzbare Kautschukmischung 0,3 bis 4 phr Hexamethylentetramin (HMT) enthält.

6. Fahrzeugluftreifen nach einem der vorherigen Ansprüche, **dadurch gekennzeichnet, dass** er die vulkanisierte Kautschukmischung zudem in einem Bauteil aufweist, in welchem die vulkanisierte Kautschukmischung nicht mit Festigkeitsträgern in Kontakt steht, wobei das Bauteil ausgewählt ist aus der Gruppe bestehend aus Apex und/oder Squeegee und/oder mondsichelförmiges Insert im Seitenwandbereich und/oder Laufstreifenbase.

7. Fahrzeugluftreifen nach einem der vorherigen Ansprüche, **dadurch gekennzeichnet, dass** er die vulkanisierte Kautschukmischung zudem als Untertreadplatte und/oder Schulterpolster aufweist.

8. Fahrzeugluftreifen nach Anspruch 7, **dadurch gekennzeichnet, dass** die vulkanisierte Kautschukmischung zumindest einen Ruß mit einer CTAB-Oberfläche von mehr als 80 m²/g enthält.

9. Fahrzeugluftreifen nach einem der vorherigen Ansprüche, **dadurch gekennzeichnet, dass** er die vulkanisierte Kautschukmischung zudem als Stahlcordgummierung aufweist.

10. Fahrzeugluftreifen nach Anspruch 9, **dadurch gekennzeichnet, dass** die vulkanisierte Kautschukmischung 40 bis 70 phr angebundene Kieselsäure enthält.

11. Fahrzeugluftreifen nach einem der vorherigen Ansprüche, **dadurch gekennzeichnet, dass** die vulkanisierte Kautschukmischung in der Kerndrahtumspritzung mehr als 45 phr eines emulsionspolymerisierten Styrolbutadiencopolymers (ESBR), mehr als 80 phr Ruß und mehr als 10 phr Weichmacheröl enthält.

## Claims

1. Pneumatic tyre comprising at least one vulcanized rubber mixture as core-wire-encapsulation material, where vulcanized rubber mixture is based on a sulphur-crosslinkable rubber mixture which comprises hexamethoxymethylmelamine (HMMM) and/or hexamethylenetetramine (HMT), where the sulphur-crosslinkable rubber mixture comprises methylene acceptor reactants only in small quantities as impurities in other constituents of the substances added to the rubber mixture, and in no case are these methylene acceptor reactants present in the rubber mixture in molar quantities of the same order of magnitude as hexamethoxymethylmelamine (HMMM) and/or hexamethylenetetramine (HMT).

2. Pneumatic tyre according to Claim 1, **characterized in that** the sulphur-crosslinkable rubber mixture comprises hexamethoxymethylmelamine (HMMM).

3. Pneumatic tyre according to Claim 2, **characterized in that** the sulphur-crosslinkable rubber mixture comprises from 0.3 to 4 phr, preferably from 0.5 to 3 phr, of hexamethoxymethylmelamine (HMMM).

4. Pneumatic tyre according to Claim 1, **characterized in that** the sulphur-crosslinkable rubber mixture comprises hexamethylenetetramine (HMT).

5. Pneumatic tyre according to Claim 4, **characterized in that** the sulphur-crosslinkable rubber mixture comprises from 0.3 to 4 phr of hexamethylenetetramine (HMT).

6. Pneumatic tyre according to any of the preceding claims, **characterized in that** it moreover comprises the vulcanized rubber mixture in a component in which the vulcanized rubber mixture is not in contact with reinforcement systems, where the component is selected from the group consisting of apex and/or squeegee and/or crescent-shaped insert in the side wall region and/or tread base.

7. Pneumatic tyre according to any of the preceding claims, **characterized in that** it moreover comprises the vulcanized rubber mixture as undertread layer and/or shoulder cushion.

8. Pneumatic tyre according to Claim 7, **characterized in that** the vulcanized rubber mixture comprises at least one carbon black with CTAB surface area more than 80 m²/g.

9. Pneumatic tyre according to any of the preceding claims, **characterized in that** it moreover comprises the vulcanized rubber mixture as steel cord rubberization.

10. Pneumatic tyre according to Claim 9, **characterized in that** the vulcanized rubber mixture comprises from 40 to 70 phr of coupled silica.

11. Pneumatic tyre according to any of the preceding claims, **characterized in that** the vulcanized rubber mixture comprises, in the core-wire-encapsulation material, more than 45 phr of an emulsion-polymerized styrene-butadiene copolymer (ESBR), more than 80 phr of carbon black and more than 10 phr of plasticizer oil.

## Revendications

1. Pneumatique pour véhicule, présentant au moins un mélange de caoutchouc vulcanisé en tant que surmoulage de fil de tringle, le mélange de caoutchouc vulcanisé étant à base d'un mélange de caoutchouc réticulable par du soufre, qui contient de l'hexaméthoxyméthylmélamine (HMMM) et/ou de l'hexaméthylènetétraamine (HMT), le mélange de caoutchouc réticulable par du soufre contenant des réactifs accepteurs de méthylène seulement en de faibles quantités comme impuretés dans d'autres constituants des additifs du mélange de caoutchouc et ces réactifs accepteurs de méthylène n'étant en aucun cas contenus en des quantités molaires du même ordre de grandeur que l'hexaméthoxyméthylmélamine (HMMM) et/ou que l'hexaméthylènetétraamine (HMT) dans le mélange de caoutchouc.

2. Pneumatique pour véhicule selon la revendication 1, **caractérisé en ce que** le mélange de caoutchouc réticulable par du soufre contient de l'hexaméthoxyméthylmélamine (HMMM).

3. Pneumatique pour véhicule selon la revendication 2, **caractérisé en ce que** le mélange de caoutchouc réticulable par du soufre contient 0,3 à 4 phr (parties pour cent de caoutchouc), de préférence 0,5 à 3 phr, d'hexaméthoxyméthylmélamine (HMMM).

4. Pneumatique pour véhicule selon la revendication 1, **caractérisé en ce que** le mélange de caoutchouc réticulable par du soufre contient de l'hexaméthylènetétraamine (HMT).

5. Pneumatique pour véhicule selon la revendication 4, **caractérisé en ce que** le mélange de caoutchouc réticulable par du soufre contient 0,3 à 4 phr d'hexaméthylènetétraamine (HMT).

6. Pneumatique pour véhicule selon l'une quelconque des revendications précédentes, **caractérisé en ce qu'**il présente le mélange de caoutchouc vulcanisé en outre dans une partie dans laquelle le mélange de caoutchouc vulcanisé n'est pas en contact avec des renforts, la partie étant choisie dans le groupe constitué par l'apex et/ou la gomme sur pli et/ou un insert en forme de croissant de lune dans la zone du flanc et/ou dans la base de la bande de roulement.

7. Pneumatique pour véhicule selon l'une quelconque des revendications précédentes, **caractérisé en ce qu'**il présente le mélange de caoutchouc vulcanisé en outre comme sous-chape et/ou rembourrage d'épaulement.

8. Pneumatique pour véhicule selon la revendication 7, **caractérisé en ce que** le mélange pour caoutchouc vulcanisé contient au moins une suie présentant une surface CTAB supérieure à 80 m²/g.

9. Pneumatique pour véhicule selon l'une quelconque des revendications précédentes, **caractérisé en ce qu'**il présente le mélange pour caoutchouc vulcanisé en outre comme revêtement en caoutchouc des fils métalliques pour carcasse.

10. Pneumatique pour véhicule selon la revendication 9, **caractérisé en ce que** le mélange pour caoutchouc vulcanisé contient 40 à 70 phr de silice liée.

11. Pneumatique pour véhicule selon l'une quelconque des revendications précédentes, **caractérisé en ce que** le mélange pour caoutchouc vulcanisé contient, dans le surmoulage de fil de tringle, plus de 45 phr d'un copolymère de styrène-butadiène polymérisé en émulsion (ESBR), plus de 80 phr de suie et plus de 10 phr d'huile plastifiante.
